Europäisches Patentamt

European Patent Office

Office européen des brevets

(19)

(11) Veröffentlichungsnummer : **0 157 893**
**B1**

(12) **EUROPÄISCHE PATENTSCHRIFT**

(45) Veröffentlichungstag der Patentschrift :
23.12.87

(21) Anmeldenummer : 84103987.8

(22) Anmeldetag : 10.04.84

(51) Int. Cl.⁴ : **F 24 H 1/00, F 24 H 1/06,**
**F 24 H 1/38, F 24 H 6/00**

(54) Heizgerät für eine Wasserheizung für Kleinräume.

(43) Veröffentlichungstag der Anmeldung :
16.10.85 Patentblatt 85/42

(45) Bekanntmachung des Hinweises auf die Patenterteilung : 23.12.87 Patentblatt 87/52

(84) Benannte Vertragsstaaten :
BE DE FR GB IT NL SE

(56) Entgegenhaltungen :
DE-A- 1 604 076
DE-C-  306 288
FR-A-  520 171
US-A- 1 441 899
US-A- 2 822 136
US-A- 3 269 382

(73) Patentinhaber : Dometic Sales Corporation
2320 Industrial Parkway
Elkhart Indiana 46515 (US)

(72) Erfinder : Mossbach, Wilhelm
Rotbuchenstrasse 37
D-8011 Kirchseeon (DE)

(74) Vertreter : Hain, Leonhard, Dipl.-Ing.
Tal 18/IV
D-8000 München 2 (DE)

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt. wenn die Einspruchsgebühr entrichtet worden ist (Art. 99(1) Europäisches Patentübereinkommen).

## Beschreibung

Die Erfindung betrifft ein Heizgerät zum Erwärmen von Heizwasser und Heizluft für die Beheizung von Kleinräumen, wie Wohnwagen, Wohnmobilen, Schiffskabinen od. dgl., gemäß dem Oberbegriff des Patentanspruches 1.

Bei einem in der Praxis bekannten Wasserheizgerät für Wohnwagen od. dgl. mobile Räume ist außen um eine Brennkammer eine schraubenförmig ansteigende Rohrschlange für das Heizwasser angebracht. Da die an diese Heizrohrschlange angeschlossenen Vor- und Rücklaufrohre zu den Radiatoren im wesentlichen gleichkalibrig sind, wird die Heizrohrschlange mit hoher Geschwindigkeit durchströmt, so daß bei hohem Wärmebedarf die Aufheizzeit in der Rohrschlange meist nicht ausreicht. Überdies sind bei dieser Bauart die Heizflächen verhältnismäßig klein, weshalb auch die Heizleistung zu wünschen übrig läßt. Zum Beheizen eines ganzen Gebäudes ist ein kombiniertes Heizgerät (US-A-2 822 136) bekannt, mit dem sowohl Wasser als auch Luft gleichzeitig erwärmt werden. Das Heizwasser befindet sich hierbei in einem ringförmigen, den Verbrennungsraum umgebenden Heizwassermantel, durch dessen Hohlschacht die Verbrennungsgase zu einem zur Seite gerichteten Abgaskamin gelenkt werden. Um im weiten Hohlschacht die Gasströmung zu drosseln, ist ein zylindrischer Einsatzkörper eingebaut, der die Verbrennungsgase zum Heizwassermantel hinführt. Dieser in diesem großräumigen Heizgerät notwendige Einsatzkörper macht die Konstruktion nicht nur aufwendig und kompliziert, sondern er vermindert auch die Heizleistung infolge unnötiger Wärmeaufnahme und als Stauwand für die aufsteigenden Verbrennungsgase. Im großen Heizwassermantel kann das Wasser in Vertikalrichtung ungehindert hochsteigen, so daß bei einer auf den Umfang ungleichmäßig verteilten Erhitzung sich oben ebenfalls ungleich hohe Temperaturen ergeben. Vor allem wird das Wasser an der Entnahmestelle auf kürzestem Weg hochsteigen und oft nicht ausreichend erwärmt sein, während an davon abgelegenen Stellen es zu einer Überhitzung des Wassers kommen kann. Bei einem ebenfalls großräumigen Kohlenfeuer-Heißwasserboiler (US-A-1 441 899) ist der Heizwasserbehälter in mehrere übereinander angeordnete horizontale Umlaufkanäle unterteilt, so daß das zu erwärmende Wasser nur in Windungen hochsteigen kann. Diese Umlaufkanäle werden von komplizierten aufeinander aufsetzbaren, scheibenförmigen Gußkörpern gebildet, die auch für eine mehrfache Umlenkung der aufsteigenden Verbrennungsgase sorgen. Dieser Wasserboiler läßt sich infolge seiner Bauart nicht zu einem kleinen Heizgerät umbauen, wie er auch mit keiner Luftheizung kombiniert werden kann. Ein anderes Heizwassergerät (DE-A-28 24 404) besteht aus konzentrisch ineinander liegenden Wellrohren von auf die volle Länge gleichem Querschnitt. Das Innenrohr bildet die Brennkammer und den Verbrennungsraum, während das äußere Rohr einen sich auf die ganze Geräte-Länge erstreckenden Heizwassermantel umschließt, in dem zur Verlängerung des Aufheizweges eine Leitwendel eingebaut ist. Da bei diesem Gerät die Verbrennungsgase in der Hauptsache geradlinig durchströmen können, ist eine vergrößerte Heizfläche und damit eine übermäßig lange Bauweise erforderlich. Auch mit entsprechend verkleinerten Abmessungen wäre dieses Gerät daher nicht zum Beheizen von Kleinräumen od. dgl. brauchbar.

Der Erfindung liegt nunmehr die Aufgabe zugrunde, ein Heizgerät für Kleinräume zum Erwärmen von Heizwasser und Heizluft zu schaffen, das sich durch einen besonders einfachen Aufbau und durch eine hohe Heizleistung auszeichnet, damit es preiswert hergestellt und auf kleinstem Raum aufgestellt werden kann.

Diese Aufgabe wird an einem Heizgerät nach dem Oberbegriff des Patentanspruches 1 erfindungsgemäß durch die kennzeichnenden Merkmale dieses Patentanspruches gelöst.

Durch die Ausbildung eines Heizwassermantels um einen trichterförmig verengten Steigeschacht des Verbrennungsraumes, welcher durch mindestens eine Trennwand in Umlaufkanäle unterteilt ist, wird das Heizwasser ausreichend lange erhitzt. An der Entnahmestelle fällt stets das am höchsten temperierte Wasser an. Die im oberen Bereich des Steigeschachtes quergerichteten Heizrippen vergrößern die Heizflächen, fächern den Verbrennungsgasstrom im Steigeschacht auf und steigern dadurch die Heizleistung. Durch die Kombination eines Heizluftmantels mit dem Heizwassermantel wird auch noch die vom Heizwassermantel nach außen abgehende Wärme zur Erwärmung von Heizluft und damit zum direkten Beheizen des Raumes, insbesondere seiner mittleren, meist kälteren Zonen, die von den Radiatoren am weitesten entfernt sind, ausgenützt. Das erfindungsgemäße Heizgerät ist besonders einfach im Aufbau und läßt sich daher preiswert und in kleinsten Abmessungen herstellen.

Vorteilhafte Weiterentwicklungen der Erfindung sind in Unteransprüchen beansprucht.

Die Erfindung wird nachfolgend anhand eines Ausführungsbeispieles, das auch in der Zeichnung schematisiert dargestellt ist, näher beschrieben. Es zeigen :

Fig. 1 einen Vertikalschnitt durch ein Heizgerät mit daran angeschlossenem Brauchwasserbereiter,

Fig. 2 einen Vertikalschnitt durch das eigentliche Heizgerät gemäß der Linie II-II der Fig. 1, etwas vergrößert,

Fig. 3 einen Querschnitt nach der Linie III-III der Fig. 2 und

Fig. 4 einen Querschnitt ähnlich Fig. 3 durch einen abgeänderten Heizwassermantel.

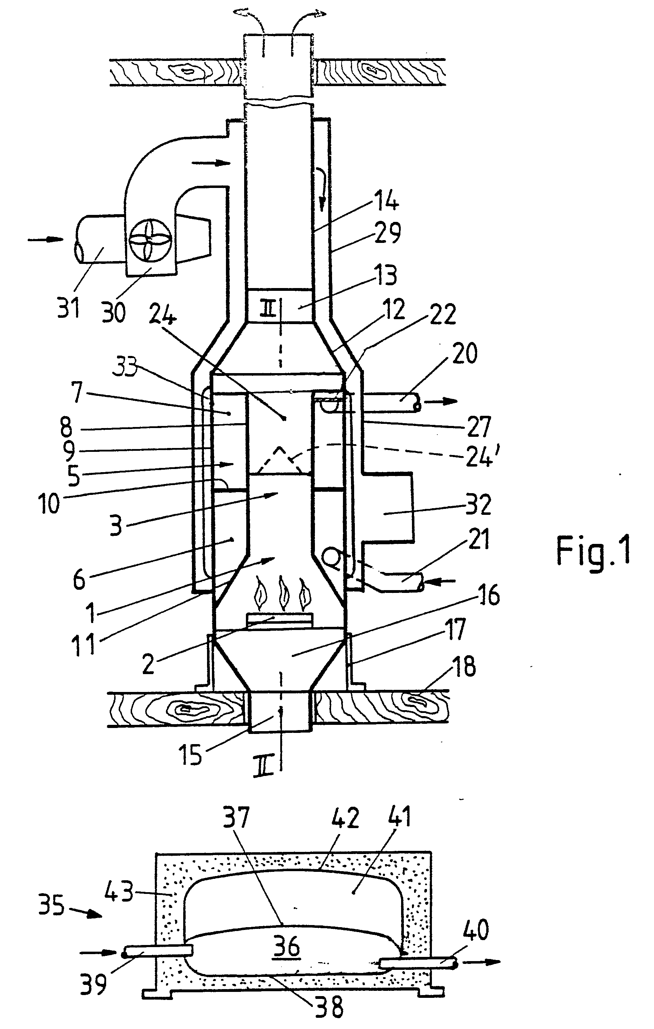

Bei dem gezeigten Heizgerät wird der Verbrennungsraum 1, in dem sich ein Brennersatz 2 befindet, von einem Steigeschacht 3 gebildet, der von einem Wärmetauscher in Form eines doppelwandigen Heizwassermantels 5 umschlossen ist. Im Ausführungsbeispiel gemäß Fig. 1 weist dieser etagenförmig übereinander angeordnete Umlaufkanäle 6 und 7 auf. Zweckmäßig besteht dieser Heizwassermantel aus einer Innenwand 8 und einer davon abgesetzten Außenwand 9, deren Zwischenraum je nach der Vielzahl der Etagen-Umlaufkanäle durch entsprechend viele horizontale Trennwände 10 unterteilt ist. Die Umlaufkanäle sind im Vertikalschnitt hochstehend rechteckig und lediglich die zum Brennersatz hinweisende Bodenwand 11 steigt nach innen schräg an, um die Heizflächen zu vergrößern, Flammenstoßwände zu vermeiden und die vom Brennersatz aufsteigenden Verbrennungsgase zusammenzuführen. Der Heizwassermantel ist oben durch eine aufgesetzte Sammelhaube 12 abgeschlossen, die in einen kreisrunden Anschlußstutzen 13 zum Aufstecken eines Abgasrohres 14 übergeht. Dieses Abgasrohr ist beispielsweise über Dach verlegt. Die Frischluft für die Gasverbrennung tritt durch eine Bodenöffnung 15 unten ein und wird über ein Erweiterungsstück 16 auf den Querschnitt des Verbrennungsraumes verteilt. Die Gasleitung zum Brennersatz ist nicht eingezeichnet. Mittels Stützen 17 ist das Heizgerät auf dem Fußboden 18 befestigt.

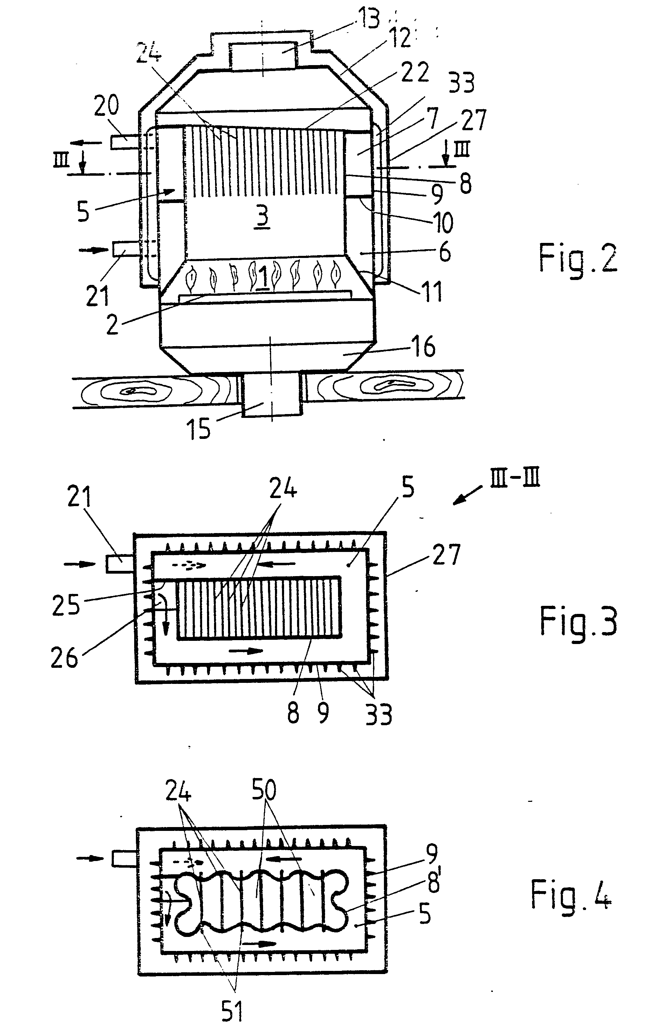

Vom oberen Umlaufkanal 7 tritt das erhitzte Heizwasser in ein Vorlaufrohr 20 ein, um die angeschlossenen Radiatoren (nicht gezeichnet) mit einem Wärmeträgermittel zu versorgen. Dessen Rückführung erfolgt durch ein Rücklaufrohr 21 in den unteren Umlaufkanal 6. Damit vor dem Vorlaufrohr 20 im oberen Umlaufkanal kein Dampf- bzw. Wasserstauraum entsteht, steigt die Umlaufkanaldecke 22 zum Vorlaufrohranschluß hin leicht an. Im Steigeschacht, zweckmäßig im Bereich des oberen Umlaufkanales 7, sind die Innenwände 6 durch parallele Heizrippen 24 miteinander verbunden, die aus gut wärmeleitendem Werkstoff bestehen. Durch diese hochkant stehenden Heizrippen werden die aufsteigenden Verbrennungsgase im Steigeschacht aufgefächert und dadurch auch das Zentrum dieses Gasstromes zur Wärmeabgabe herangezogen. Bei einem länglich-rechteckigen Steigeschachtquerschnitt sind die Heizrippen zweckmäßig, wie Fig. 3 und 4 zeigen, zwischen den langen Innenwänden 8 angeordnet. Diese Heizrippen können Vollkörper, wie gezeichnet, oder auch Hohlkörper zum Durchfluß des Heizwassers sein. Im letzteren Fall werden die Heizrippenquerschnitte wesentlich größer und deshalb die Anzahl der Rippen auch geringer sein. Um zu vermeiden, daß das Heizwasser im Heizwassermantel im unteren Bereich der Heizrippen zu stark erhitzt und dadurch zum Kochen gebracht wird, können einige oder alle Heizrippen, insbesondere wenn es sich um Vollkörperrippen handelt, im unteren Bereich zur Mitte hin ausgeschnitten sein, so daß die Unterkante 24' (Fig. 1, gestrichelt) dieser Heizrippen dreiecks- oder bogenförmig ansteigt und dadurch die Heizflächen im unteren Bereich der Heizrippen merklich verkleinert werden. Die Umlaufkanäle sind miteinander so verbunden, daß die Umlaufströmung im jeweils oberen Umlaufkanal entgegengesetzt zu der im unteren verläuft. Wenn also das Rücklaufwasser durch das Rücklaufrohr 21 in den unteren Umlaufkanal 6 eintritt, dann zwingt eine Abschlußwand 25 das eintretende Wasser zum Umlauf in Richtung des gestrichelten Pfeiles, bis es am Ende dieses Umlaufkanales an der anderen Seite dieser Abschlußwand 25 umgelenkt wird, durch eine Trennwandöffnung 26 in den oberen Umlaufkanal 7 hochsteigt und in Richtung der ausgezogenen Pfeile bis zum Vorlaufrohr 20 diesen oberen Umlaufkanal durchströmt.

Während in Fig. 3 der Heizwassermantel 5 eine ebene Innenwand 8 aufweist, ist die Innenwand 8' bei der Ausführungsform gemäß Fig. 4 gewellt, um so die Heizfläche zu vergrößern. Durch vertikale Wellen werden außerdem Schachtzüge 50 gebildet, die die Strömung der Verbrennungsgase längs diesen Wellen fördern, andererseits aber das zu den Wellen querströmende Wasser durchwirbelt und durchmischt wird. Aus Fig. 4 ist ferner ersichtlich, daß einige der Heizrippen 24 mit ihren Enden 51 die Innenwand 8' durchdringen und im Heizwassermantel enden.

Das gezeigte Heizgerät ist im Bereich des Heizwassermantels mit Abstand von einem Heizluftmantel 27 umgeben. Dieser Heizluftmantel erstreckt sich beim Ausführungsbeispiel auch als Kaminmantel 29 um das Abgasrohr 14, so daß auch die Wärme der Abgase ausgenützt wird. Mittels eines oberhalb des Heizgerätes angebrachten Gebläses 30 wird die zu erwärmende Raumluft durch einen Lufteintritt 31 angesaugt und durch den Luftmantel 29, 27 nach unten gedrückt. Aus der Austrittsöffnung 32 strömt dann die erwärmte Luft in den Raum, und zwar in möglichst tiefer Lage, um auch in der Raummitte unmittelbar über dem Fußboden die Lufttemperatur zu erhöhen. Auf der Außenwand 9 des Heizwassermantels sind vorteilhaft Vertikalrippen 33 angeformt, die den Wärmeübergang an den Luftstrom wesentlich verbessern. Es hat sich gezeigt, daß die Leistungsfähigkeit des Heizgerätes ausreicht, um dem Heizwasser Wärme zur Erwärmung der Heizluft entziehen zu können. Zudem wird durch die Wärmeabgabe an die Heizluft eine zu starke Erhitzung des Heizwassers mit der Folge der Dampfbildung weitgehend vermieden. Durch die Heizluftgewinnung ergibt sich auch die Möglichkeit einer gewissen Regulierung und Stabilisierung der Heizwassertemperatur.

Die günstige Heizwasserbereitung dieses Heizgerätes läßt den zusätzlichen Einsatz eines Brauchwasserbereiters 35 zu, der an Abzweigleitungen der Vor- und Rücklaufrohre 20, 21 des Heizgerätes angeschlossen ist. Der Brauchwasserbereiter besteht aus einem etwa linsenförmigen Flächenheizkörper 36 aus zwei möglichst gleichmäßig geformten Schalen 37, 38 mit einem etwa geradlinigen Durchfluß des Heizwassers mit einem Zuflußrohr 39 und einem Abflußrohr 40. Auf dem Flächenheizkörper ist ein Brauchwasserkessel 41, zweckmäßig mit einer ebenfalls gewölbten Decke 42, aufgesetzt. Der gesamte Brauchwasserbereiter ist in eine Wärmeisolierung 43 eingehüllt. Die Brauchwasser-Zu- und Abflußanschlüsse sind nicht eingezeichnet. Der nur aus drei Formteilen zusammengebaute und daher sehr einfache Brauchwasserbereiter weist eine verhältnismäßig große Heizfläche auf, die eine ausreichende Erwärmung des Brauchwassers gewährleistet. Durch das Fassungsvermögen des Flächenheizkörpers 36 wird zusätzlich die Heizwassermenge und dadurch auch die Wärmespeicherung vergrößert.

Die Erfindung beschränkt sich nicht auf das gezeigte Ausführungsbeispiel mit den beiden Umlaufkanälen des Heizwassermantels ; denn bei einem etwas höheren Steigeschacht lassen sich auch drei oder mehr Umlaufkanäle unterbringen, ohne daß dabei die vergleichsweise hohen Kanäle mit den großen Heizflächen aufgegeben werden müssen. Durch den Einbau von Leitblechen ist es auch möglich, den Heizwassermantel mit nur einem Umlaufkanal auszubilden, so daß das Heizwasser auch in diesem Falle den Steigeschacht möglichst im vollen Umfang umströmt. Vertikale Leitbleche können auch bei Vorhandensein von mehreren Umlaufkanälen den Strömungsweg in den einzelnen Kanälen noch verlängern.

Die im Ausführungsbeispiel gleichgerichteten Heizrippen können noch durch weitere, in einer anderen Richtung verlaufende Rippen, z. B. in kreuzweiser Anordnung, ergänzt sein. An einem Heizgerät können die Heizrippen auch verschieden lang sein. Beispielsweise können einzelne Rippen weiter nach unten in den Verbrennungsraum hineinragen, um schon eine Voraufteilung des Verbrennungsgasstromes zu bewirken. Die Umlaufkanäle können auch von selbständigen Bauteilen gebildet sein, die dann zu einem Heizwassermantel zusammengesetzt werden.

## Patentansprüche

1. Heizgerät zum Erwärmen von Heizwasser und Heizluft für die Beheizung von Kleinräumen, wie Wohnwagen, Wohnmobilen, Schiffskabinen od. dgl, mit einem über einem Brennersatz (2) für gasförmige oder vergaste flüssige Brennstoffe ausgebildeten Verbrennungsraum (1), der in einen vertikalen Steigeschacht (3) und in ein Abgasrohr (14) zum Abzug der Verbrennungsgase übergeht, einem diesen Steigeschacht umgebenden doppelwandigen Heizwassermantel (5), von dessen Innenwand (8) Heizrippen (24) in den Steigeschacht (3) hineinragen, an diesem Heizwassermantel angeschlossene Vor- und Rücklaufrohre (20, 21) zur Versorgung von Radiatoren od. dgl. Heizkörpern mit Heizwasser und mit einem den Heizwassermantel außen umgebenden Heizluftmantel (27), dadurch gekennzeichnet, daß der Heizwassermantel (5) mit seiner schräg nach innen ansteigenden Bodenwand (11) einen trichterförmigen Übergang zum Steigeschacht (3) bildet, der Heizwassermantel (5) durch mindestens eine horizontale Trennwand (10) in übereinander angeordnete Umlaufkanäle (6, 7), die durch eine Überleitöffnung (26) miteinander in Verbindung stehen, unterteilt ist, am untersten Umlaufkanal (6) das Rücklaufrohr (21) und am obersten Umlaufkanal (7) das Vorlaufrohr (20) angeschlossen ist, gegenüberliegende Innenwände (8) des Heizwassermantels (5) durch die den Steigeschacht im Bereich des Umlaufkanales (7) durchquerenden Heizrippen (24) verbunden sind und der Heizluftmantel (27) mit seinem oberen Lufteintritt (31) das Abgasrohr (14) umschließt und sein unterer Luftaustritt (32) mindestens so tief wie der untere Umlaufkanal (6) angeordnet ist.

2. Heizgerät nach Anspruch 1, dadurch gekennzeichnet, daß an der Überleitöffnung (26) der Trennwand (10) eine Abschlußwand (25) zur Richtungsänderung der Heizwasserströmung im nachfolgenden Umlaufkanal (7) vorgesehen ist.

3. Heizgerät nach Anspruch 1, dadurch gekennzeichnet, daß die untere Kante (24') der Heizrippen (24) im mittleren Bereich nach oben dreiecks- oder bogenförmig ansteigt.

4. Heizgerät nach Anspruch 1 oder 3, dadurch gekennzeichnet, daß die Heizrippen (24) zum Durchfluß von Heizwasser hohl ausgebildet sind.

5. Heizgerät nach einem der Ansprüche 1 bis 4, dadurch gekennzeichnet, daß die Innenwand (8') des Heizwassermantels (5) gewellt ist.

6. Heizgerät nach einem der Ansprüche 1 bis 5, dadurch gekennzeichnet, daß mindestens ein Teil der Heizrippen (24) die Innenwand (8, 8') des Heizwassermantels durchdringt und im Inneren des Heizwassermantels (5) endet.

7. Heizgerät nach einem der Ansprüche 1 bis 6, dadurch gekennzeichnet, daß der Steigeschacht (3) mittels einer Sammelhaube (12) in das Abgasrohr (14) übergeht.

8. Heizgerät nach einem der Ansprüche 1 bis 7, dadurch gekennzeichnet, daß der Steigeschacht (3) und die ihn umschließenden Heizwasser- und Heizluftmäntel (5 bzw. 27) länglich-rechteckigen Querschnitt aufweisen.

## Claims

1. Heating apparatus for heating heating-water and heating-air for the heating of small rooms, such as caravans, dormobiles, ships'cabins or the like, comprising a combustion chamber (1) which is formed above a set of burners (2) for gaseous or gasified liquid fuels and which leads into a vertical rising stack (3) and into a waste-gas pipe (14) for the draw-off of the combustion gases, a double-walled heating-water jacket (5) which surrounds this rising stack and from the inner wall (8) of which heating ribs (24) project into the rising stack (3), feed and return pipes (20, 21), connected to this heating-water jacket, for the supply of radiators or similar heating bodies with heating water, and a heating-air jacket (27) which surrounds the heating-water jacket on the outside, characterised in that the heating-water jacket (5) forms, with its base wall (11) rising obliquely inwards, a funnel-shaped transition to the rising stack (3), the heating-water jacket (5) is subdivided by at least one horizontal dividing wall (10) into circulation ducts (6, 7) which are arranged one above the other and which communicate with one another through a transfer aperture (26), the return pipe (21) is connected to the bottommost circulation duct (6) and the feed pipe (20) is connected to the topmost circulation duct (7), opposing inner walls (8) of the heating-water jacket (5) are connected by the heating ribs (24) which traverse the rising stack in the region of the circulation duct (7) and the heating-air jacket (27), with its upper air inlet (31), surrounds the waste-gas pipe (14) while its lower air outlet (32) is arranged at least as low down as the lower circulation duct (6).

2. Heating apparatus according to claim 1, characterised in that a sealing wall (25) for changing the direction of the heating water flow in the following circulation duct (7) is provided at the transfer aperture (26) of the dividing wall (10).

3. Heating apparatus according to claim 1, characterised in that the lower edge (24') of the heating ribs (24) rises triangularly or arcuately upwards in the central region.

4. Heating apparatus according to claim 1 or 3, characterised in that the heating ribs (24) are of hollow design for the passage of heating water.

5. Heating apparatus according to one of claims 1 to 4, characterised in that the inner wall (8') of the heating-water jacket (5) is corrugated.

6. Heating apparatus according to one of claims 1 to 5, characterised in that at least a part of the heating ribs (24) penetrates the inner wall (8, 8') of the heating-water jacket and ends in the interior of the heating-water jacket (5).

7. Heating apparatus according to one of claims 1 to 6, characterised in that the rising stack (3) leads into the wastegas pipe (14) by way of a collecting hood (12).

8. Heating apparatus according to one of claims 1 to 7, characterised in that the rising stack (3) of the heating-water and heating-air jackets (5, 27 respectively) surrounding it have an elongatedly-rectangular cross-section.

## Revendications

1. Appareil de chauffage pour chauffer de l'eau et de l'air en vue du chauffage de petits locaux, tels que des caravanes, des maisons mobiles, des cabines de navire, ou des locaux analogues, comportant une chambre de combustion (1) qui est agencée au-dessus d'un groupe de brûleurs (2) de combustibles gazeux ou liquides, gazéifiés, et qui se transforme en une colonne ascendante verticale (3) et en un tuyau de gaz d'échappement (14) destiné au tirage des gaz de combustion, une enveloppe à eau chaude (5) à double paroi qui entoure cette colonne ascendante et à partir de la paroi interne (8) de laquelle des ailettes de chauffage (24) font saillie dans la colonne ascendante (3), des tuyaux d'aller et de retour (20, 21) raccordés à cette enveloppe à eau chaude pour l'alimentation en eau chaude de radiateurs ou de corps chauffants analogues, et une enveloppe à air chaud (27) entourant l'enveloppe à eau chaude à l'extérieur, caractérisé en ce que l'enveloppe à eau chaude (5) forme avec sa paroi de fond (11), qui s'élève de manière inclinée vers l'intérieur, une transition en forme d'entonnoir vers la colonne ascendante (3), en ce que l'enveloppe à eau chaude (5) est subdivisée par au moins une cloison horizontale (10) en des canaux de circulation (6, 7) qui sont disposés l'un au-dessus de l'autre et qui communiquent mutuellement par une ouverture de passage (26), en ce que le tuyau de retour (21) est raccordé au canal de circulation inférieur (6) et le tuyau d'aller (20) au canal de circulation supérieur (7), en ce que les parois internes opposées (8) de l'enveloppe à eau chaude (5) sont reliées par les ailettes de chauffage (24) qui traversent la colonne ascendante dans la zone du canal de circulation (7) et en ce que l'enveloppe à air chaud (27) entoure le tuyau de gaz d'échappement (24) par son entrée d'air supérieure (31) et en ce que sa sortie d'air inférieure (32) est agencée au moins aussi bas que le canal de circulation inférieur (6).

2. Appareil de chauffage suivant la revendication 1, caractérisé en ce que, à l'ouverture de passage (26) de la cloison (10), une paroi de fermeture (25) est prévue pour modifier le sens de l'écoulement de l'eau chaude dans le canal de circulation suivant (7).

3. Appareil de chauffage suivant la revendication 1, caractérisé en ce que l'arête inférieure (24') des ailettes de chauffage (24) s'élève vers le haut sous une forme triangulaire ou arquée dans la zone centrale.

4. Appareil de chauffage suivant l'une des revendications 1 et 3, caractérisé en ce que les ailettes de chauffage (24) sont réalisées sous une forme creuse pour le passage d'eau chaude.

5. Appareil de chauffage suivant l'une des revendications 1 à 4, caractérisé en ce que la paroi interne (8') de l'enveloppe à eau chaude (5) est ondulée.

6. Appareil de chauffage suivant l'une des revendications 1 à 5, caractérisé en ce qu'au moins une partie des ailettes de chauffage (24) traverse la paroi interne (8, 8') de l'enveloppe à eau chaude et se termine à l'intérieur de l'enveloppe à eau chaude (5).

7. Appareil de chauffage suivant l'une des revendications 1 à 6, caractérisé en ce que la colonne ascendante (3) se transforme en tuyau de gaz d'échappement (14) à l'aide d'un capot collecteur (12).

8. Appareil de chauffage suivant l'une des revendications 1 à 7, caractérisé en ce que la colonne ascendante (3) et l'enveloppe à eau chaude et celle à air chaud (5 et 27) qui l'entourent présentent une section transversale rectangulaire allongée.

0 157 893

Fig.1

Fig.2

Fig.3

Fig.4